# EUROPEAN PATENT SPECIFICATION

(11) **EP 3 486 454 B1**
(45) Date of publication and mention of the grant of the patent: **01.01.2025**
(21) Application number: 18207303.1
(22) Date of filing: 20.11.2018
(51) Int. Cl.: F02C 3/24, C10G 11/05, F02C 3/28, F02C 7/12, F02C 7/224

(54) **GAS TURBINE ENGINE WITH FUEL-CRACKING CATALYST**
GASTURBINENMOTOR MIT KRAFTSTOFF-CRACKING-KATALYSATOR
MOTEUR À TURBINE À GAZ COMPORTANT UN CATALYSEUR DE CRAQUAGE DE COMBUSTIBLE

(30) Priority: 20.11.2017 US 201715817616
(43) Date of publication of application: 22.05.2019
(73) Proprietor: Hamilton Sundstrand Corporation, Charlotte, NC 28217-4578 (US)
(72) Inventor: ZHU, Tianli, Glastonbury, CT 06033 (US); SMITH, Lance L., West Hartford, CT 06117 (US); OPALKA, Susanne M., Old Chatham, NY 12136 (US)
(74) Representative: Dehns

(56) References cited:
- EP-A1- 0 638 715
- EP-A1- 1 579 901
- JP-A- 2013 185 493
- US-A1- 2009 166 001
- LIU LICHEN ET AL: "Generation of subnanometric platinum with high stability during transformation of a 2D zeolite into 3D", NATURE MATERIALS, vol. 16, no. 1, 1 January 2017 (2017-01-01), London, pages 132 - 138, XP055817087, ISSN: 1476-1122, Retrieved from the Internet <URL:https://www.nature.com/articles/nmat4757.pdf> [retrieved on 20220125], DOI: 10.1038/nmat4757

## Description

### BACKGROUND

Fuel is widely known and used in the aircraft industry as a heat sink before combustion for cooling heat-producing aircraft components. For example, in aircraft having gas turbine engines, the fuel can be used to cool engine lubricating oil, bleed air from an engine compressor in a cabin air cycle control system, heat-producing aircraft components in a thermal management system, or engine turbine cooling air in a turbine film cooling system. In addition to the fuel's sensible heat capacity, the fuel heat sink is augmented by the onset of endothermic fuel cracking reactions, which both absorb heat with increasing temperature, especially above 300 °F. The fuel endothermicity is determined by the types and distribution of cracked products formed, where unsaturated (dehydrogenated) products provide the greatest endothermicity.

However, the cooling capacity of fuel is limited above 350 °F, by the tendency of fuel to undergo side-reactions that lead to the formation of coke deposits, which are highly reacted solid residues having C:H ratios greater than 1, that can interfere with fuel flow, heat transfer, and engine performance. The presence of dissolved oxygen initiates the formation of deposits commonly referred to as autoxidative "coke" or "coking" at temperatures between 350 °F and 850 °F. Lowering the oxygen concentration over this temperature range can mitigate the coking problem. However, with increasing temperature there is also an exponentially increasing tendency towards coke formation from fuel cracking and pyrolysis side-reactions. Pyrolytic coke formation becomes significant above 850 °F, even in the absence of oxygen. In addition, for some aircraft, an even greater cooling capacity is desired. For example, hypersonic aircraft or other types of propulsion devices or engines may operate under supercritical fuel conditions at temperatures near or above 850 °F and up to about 1700 °F. At such temperatures and fuel densities, traditional fuel treatments may not provide enough fuel cooling capacity without the occurrence of coking.

Document EP 0 638 715 A1 discloses a prior art gas turbine engine.

### SUMMARY

A gas turbine engine as defined in claim 1 includes amongst others a combustor, a turbine section downstream of the combustor, a nozzle section downstream of the turbine section, a heat exchanger (e.g. as described herein) in the turbine section or downstream of the nozzle section, and a fuel supply line for conveying fuel through the heat exchanger and to the combustor. The heat exchanger includes a fuel-cracking catalyst as described herein.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates a gas turbine engine with a heat exchanger that has a fuel-cracking catalyst. The heat exchanger is downstream of the turbine section of the engine but upstream of the nozzle section of the engine.
Figure 2 illustrates another example gas turbine engine with a heat exchanger that has a fuel-cracking catalyst. The heat exchanger in this example is in the turbine section of the engine.
Figure 3 illustrates another example gas turbine engine with a heat exchanger that has a fuel-cracking catalyst. The heat exchanger in this example is downstream of the nozzle of the engine.
Figure 4 illustrates a representative portion of an example heat exchanger.
Figure 5 illustrates a representative portion of a fuel-cracking catalyst.

### DETAILED DESCRIPTION

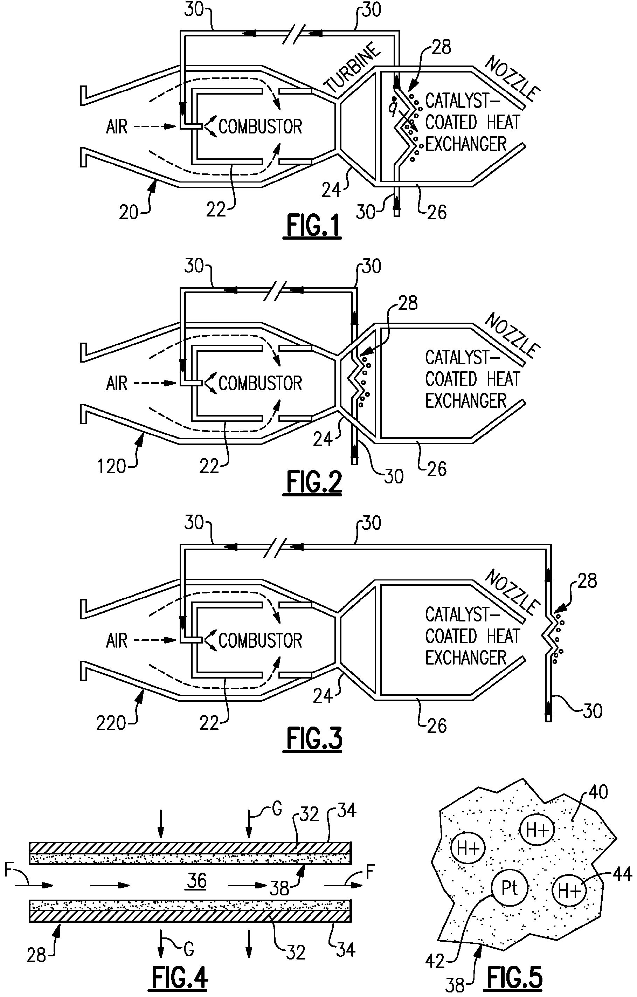

Figure 1 schematically illustrates a gas turbine engine 20. In this example, the engine 20 at least includes a combustor 22, a turbine section 24 downstream of the combustor 22, a nozzle section 26 downstream of the turbine section 24, and a heat exchanger 28. In this example, the heat exchanger 28 is located downstream of the turbine section but upstream of the nozzle section 26. A fuel supply line 30 is connected to the heat exchanger 28 to convey fuel through the heat exchanger 28 and to the combustor 22. In one modified example of an engine 120 shown in Figure 2, the heat exchanger 28 is instead located in the turbine section 24, such as between turbine stages. In another example of an engine 220 shown in Figure 3, the heat exchanger 28 is instead located downstream of a nozzle, e.g. a nozzle section. As will be appreciated, the examples herein may be applied to other types of engine architectures.

Figure 4 illustrates a representative portion of the heat exchanger 28. The type of heat exchanger 28 is not particularly limited and may be, for example only, a tube and fin heat exchanger or a shell and tube heat exchanger. The heat exchanger 28 includes a wall 32 that has an exterior surface 34 for conducting combustion product gas, represented at G, from the combustor 22. The wall 32 defines an interior flow passage 36 for conducting fuel, represented at F. Thermal energy is transferred across the wall 32 between the gas G and the fuel F. Namely, the gas G heats the fuel F.

To enhance cooling capacity of the fuel F, the heat exchanger 28 includes a fuel cracking catalyst 38 disposed in the interior flow passage 36. For instance, as shown, the catalyst 38 is disposed as a fixed layer on the interior of the wall 32. Alternatively, the catalyst 38 could be provided as media or particles in a packed bed in the passage 36, or even as additive particles in the fuel to be circulated through the heat exchanger 28 with the fuel. The catalyst 38 chemically cracks and dehydrogenates the fuel F to increase the fuel endotherm and also recover waste heat from the engine 20, enabling the engine to operate at the same temperatures with less fuel, thereby enhancing engine efficiency. The increased endotherm provides the fuel F with a greater capacity to receive and remove heat. For example, prior to injection into the combustor 22, the fuel can be circulated through a heat source, such as a bearing, electronics, airframe, or an oil-fuel heat exchanger to cool the heat source.

The catalyst 38 is adapted for cracking and dehydrogenation of the fuel at high temperatures and pressures, such as temperatures in excess of 850 °F and as high as 1700 ^{o}F or at or near supercritical fuel conditions. At such temperatures or conditions, a typical cracking catalyst has low yield of endothermic products, such as olefins, which in turn provides low endothermic effect (i.e., low cooling effect). Coke formation is also a concern at these temperatures and conditions. In this regard, the catalyst 38 is designed to be bi-functional to provide good cracking and dehydrogenation at such temperatures and conditions, while reducing coke formation.

Figure 5 shows a representative portion of the catalyst 38. The catalyst 38 includes a protonated solid acid support 40 and one or more transition metals at metal sites 42, including at least platinum, nickel, or copper. The support 40 includes acid sites 44, which are locations where donor protons are available (Bronsted acid sites). The support 40 is a zeolite that has a ratio of silica to alumina that is at least 11 and no greater than 25.

The metal, metal loading, and support are selected such that the adsorption or bonding interaction between hydrocarbon and metal sites 42 is stronger than the interaction between hydrocarbon and acid sites 44. In this regard, the acid sites 44 and the metal sites or clusters 42 are sufficiently spaced apart, i.e. spaced more than 7 angstroms apart, so that the cracked products of fuel hydrocarbon molecules cannot simultaneously bond with both sites. Kerosene-type jet fuels predominantly contain hydrocarbons with 8-16 carbon atoms, and typically form cracked hydrocarbon products with 3-8 carbon atoms. The hydrocarbons primarily bind to the metal and acid sites through their intermediate secondary and tertiary carbon backbone atoms. The feed hydrocarbons and intermediates can thus be dehydrogenated at the metal sites without simultaneously going through further isomerization or oligomerization on acid sites 44 to form heavy hydrocarbons or coke.

The catalyst 38 has 0.25-5% by weight of platinum or, in a further example, 1-4% by weight platinum. The sites or clusters 42 of platinum are monodisperse and have a cluster size of no greater than 6 angstroms or no greater than 4 angstroms. Monodisperse Pt distribution provides the highest Pt utilization, where every Pt atom is accessible to participate in hydrocarbon conversion reactions. Such a cluster size reduces the chance of blocking pore channels in the support 40, which may have diameters less than 5 or 7 angstroms. Nickel or copper may be used as described above instead of or in combination with platinum, or in combination with each other.

In further examples, the support 40 is a zeolite that has a surface area of 100 - 1000 meters squared per gram and a selected ratio of silica to alumina ("SAR"). The acid sites 44 are formed by the substitution of Al for Si in the silica framework of the zeolite. The Al has a +3 charge and is tetrahedrally coordinated to oxygen in the same arrangement as the +4 charged Si. The substitution locations are thus negatively charged because the charge imbalance introduced by the lower Al charge, and are typically neutralized by protonation. Lower SARs thus represent higher concentration of Al and higher acidity, while higher SARs represent lower concentration of Al and lower acidity. To keep a good spacing between the metal sites 42 and the acid sites 44 (e.g. for the example amount of platinum), the SAR of the support 40 is at least 11 and no greater than 25. For instance, a SAR of 11 and platinum loading of about 3.3 weight% is expected to yield one platinum atom for one out of eight acid sites 44. A good spacing can thus be maintained between the platinum and the acid site 44, assuming platinum monodispersion.

The table below lists further example of the catalyst 38.

| Weight% Pt | SAR (zeolite) |
|---|---|
| 0.5-4 | 11-15 |
| 0.3-2.5 | 15-20 |
| 0.25-2 | 20-25 |

In additional examples, the one or more transition metals, in addition to platinum, nickel, or copper, is selected from the group consisting of rhenium, tin, palladium, and combinations thereof, e.g. the one or more metals at the metal sites 42 further include an alloy metal selected from rhenium, tin, palladium, or combinations thereof. The alloy metal may serve to modify the activity of the platinum, nickel, or copper, and may be provided up to about a 1:1 weight ratio with platinum, nickel, or copper. In the examples herein, the alloy metal may replace a percentage of the platinum, nickel, or copper, or be in addition to the percentage of platinum, nickel, or copper. In one further example, the one or more metals is at least a ternary alloy with platinum and two or more alloy metals.

The catalyst 38 may be fabricated using known processing techniques. Highly dispersed transition metals, platinum for example, loaded internally within aluminosilicate zeolite pores form stable bonds in the proximity of the acid sites 44. The transition metals can be loaded by impregnation of a transition metal salt precursor, such as the platinum precursor tetraamine platinum nitrate, followed by heat treatment, and optionally reduction.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. An aircraft gas turbine engine (20, 120, 220) comprising:
a combustor (22);
a turbine section (24) downstream of the combustor (22);
a nozzle section (26) downstream of the turbine section (24);
a heat exchanger (28); and
a fuel supply line for conveying fuel through the heat exchanger (28) and to the combustor (22);
wherein the heat exchanger (28) includes a fuel-cracking catalyst (38), the fuel-cracking catalyst (38) comprising:
a protonated solid acid support (40); **characterised in that**
the heat exchanger is in the turbine section (24) or downstream of the nozzle section (26); and
the catalyst (38) further comprises 0.25-5% by weight of monodisperse metal catalyst clusters in the protonated solid acid support (40), the monodisperse metal catalyst clusters having a cluster size of no greater than 6 angstroms and comprising one or more transition metals including at least platinum, nickel, or copper, wherein
the fuel-cracking catalyst (38) has 0.25-5% by weight of platinum, nickel, or copper; and
the protonated solid acid support (40) is a zeolite that has a ratio of silica to alumina that is at least 11 and no greater than 25;
wherein the protonated solid acid support (40) includes acid sites (44) and the one or more transition metals are at metal sites (42), and the acid sites (44) and the metal sites (42) are spaced more than 7 angstroms apart to prevent cracked products of fuel hydrocarbon molecules from simultaneously bonding with both the acid sites (44) and the metal sites (42).

2. The aircraft gas turbine engine (20, 120, 220) of claim 1, wherein the fuel-cracking catalyst (38) has 1-4% by weight of platinum, nickel, or copper, and the zeolite has a surface area of 100-1000 meters squared per gram.

3. The aircraft gas turbine engine (20, 120, 220) of claim 1 or claim 2, wherein the one or more transition metals, in addition to platinum, nickel, or copper, is selected from the group consisting of rhenium, tin, palladium, and combinations thereof.

4. The gas turbine engine (20, 120, 220) according to claim 1, wherein the heat exchanger (28) is downstream of the nozzle section (26).

## Patentansprüche

1. Flugzeug-Gasturbinenmotor (20, 120, 220), umfassend:
eine Brennkammer (22);
einen Turbinenabschnitt (24) stromabwärts der Brennkammer (22);
einen Düsenabschnitt (26) stromabwärts des Turbinenabschnitts (24) ;
einen Wärmetauscher (28);
und
eine Kraftstoffzufuhrleitung zum Fördern von Kraftstoff durch den Wärmetauscher (28) und zu der Brennkammer (22);
wobei der Wärmetauscher (28) einen Kraftstoff-Cracking-Katalysator (38) beinhaltet, wobei der Kraftstoff-Cracking-Katalysator (38) Folgendes umfasst:
einen protonierten festen Säureträger (40); **dadurch gekennzeichnet, dass** sich der Wärmetauscher in dem Turbinenabschnitt (24) oder stromabwärts des Düsenabschnitts (26) befindet; und
der Katalysator (38) ferner 0,25-5 Gew.-% monodisperse Metallkatalysatorcluster in dem protonierten festen Säureträger (40) umfasst, wobei die monodispersen Metallkatalysatorcluster eine Clustergröße von nicht mehr als 6 Angström aufweisen und ein oder mehrere Übergangsmetalle umfassen, einschließlich mindestens Platin, Nickel oder Kupfer, wobei
der Kraftstoff-Cracking-Katalysator (38) 0,25-5 Gew.-% Platin, Nickel oder Kupfer aufweist; und
der protonierte feste Säureträger (40) ein Zeolith ist, der ein Verhältnis von Siliciumdioxid zu Aluminiumoxid von mindestens 11 und höchstens 25 aufweist;
wobei der protonierte feste Säureträger (40) Säurestellen (44) beinhaltet und sich das eine oder die mehreren Übergangsmetalle an Metallstellen (42) befinden und die Säurestellen (44) und die Metallstellen (42) mehr als 7 Angström voneinander beabstandet sind, um zu verhindern, dass gecrackte Produkte von Kraftstoff-Kohlenwasserstoffmolekülen gleichzeitig Bindungen sowohl mit den Säurestellen (44) als auch mit den Metallstellen (42) eingehen.

2. Flugzeug-Gasturbinenmotor (20, 120, 220) nach Anspruch 1, wobei der Kraftstoff-Cracking-Katalysator (38) 1-4 Gew.-% Platin, Nickel oder Kupfer aufweist und der Zeolith eine Oberfläche von 100-1000 Quadratmetern pro Gramm aufweist.

3. Flugzeug-Gasturbinenmotor (20, 120, 220) nach Anspruch 1 oder Anspruch 2, wobei das eine oder die mehreren Übergangsmetalle zusätzlich zu Platin, Nickel oder Kupfer aus der Gruppe ausgewählt sind, die aus Rhenium, Zinn, Palladium und Kombinationen davon besteht.

4. Gasturbinenmotor (20, 120, 220) nach Anspruch 1, wobei sich der Wärmetauscher (28) stromabwärts des Düsenabschnitts (26) befindet.

## Revendications

1. Moteur à turbine à gaz (20, 120, 220) d'aéronef comprenant :
une chambre de combustion (22) ;
une section de turbine (24) en aval de la chambre de combustion (22) ;
une section de buse (26) en aval de la section de turbine (24) ;
un échangeur de chaleur (28) ;
et
une conduite d'alimentation en carburant pour transporter le carburant à travers l'échangeur de chaleur (28) et vers la chambre de combustion (22) ;
dans lequel l'échangeur de chaleur (28) comprend un catalyseur de craquage de carburant (38), le catalyseur de craquage de carburant (38) comprenant :
un support solide acide protoné (40) ; **caractérisé en ce que** l'échangeur de chaleur est dans la section de turbine (24) ou en aval de la section de buse (26) ; et
le catalyseur (38) comprend également 0,25 % à 5 % en poids d'agrégats catalytiques métalliques monodispersés dans le support solide acide protoné (40), les agrégats catalytiques métalliques monodispersés ayant une taille d'agrégat ne dépassant pas 6 angströms et comprenant un ou plusieurs métaux de transition comprenant au moins du platine, du nickel ou du cuivre, dans lequel
le catalyseur de craquage de carburant (38) contient 0,25 % à 5 % en poids de platine, de nickel ou de cuivre ; et
le support solide acide protoné (40) est une zéolite qui présente un rapport silice/alumine qui est d'au moins 11 et pas supérieur à 25 ;
dans lequel le support solide acide protoné (40) comprend des sites acides (44) et l'un ou les plusieurs métaux de transition se trouvent sur des sites métalliques (42), et les sites acides (44) et les sites métalliques (42) sont espacés de plus de 7 angströms pour empêcher les produits craqués de molécules d'hydrocarbures de carburant de se lier simultanément à la fois aux sites acides (44) et aux sites métalliques (42).

2. Moteur à turbine à gaz (20, 120, 220) d'aéronef selon la revendication 1, dans lequel le catalyseur de craquage de carburant (38) contient 1 % à 4 % en poids de platine, de nickel ou de cuivre, et la zéolite a une surface spécifique de 100 mètres carrés à 1 000 mètres carrés par gramme.

3. Moteur à turbine à gaz (20, 120, 220) d'aéronef selon la revendication 1 ou la revendication 2, dans lequel l'un ou les plusieurs métaux de transition, en plus du platine, du nickel ou du cuivre, sont choisis dans le groupe constitué du rhénium, de l'étain, du palladium et de combinaisons de ceux-ci.

4. Moteur à turbine à gaz (20, 120, 220) selon la revendication 1, dans lequel l'échangeur de chaleur (28) se trouve en aval de la section de buse (26).
